# EUROPEAN PATENT APPLICATION

(11) **EP 4 535 529 A1**
(43) Date of publication of application: **09.04.2025**
(21) Application number: 24197872.5
(22) Date of filing: 02.09.2024
(51) Int. Cl.: H01M 50/213, H01M 50/559

(54) **BATTERY MODULE**

(30) Priority: 04.09.2023 KR 20230117103
(71) Applicant: SAMSUNG SDI CO., LTD., Yongin-si, Gyeonggi-do 17084 (KR)
(72) Inventor: Kang, Il Oh, 17084 Yongin-si, Gyeonggi-do (KR)
(74) Representative: Gulde & Partner

(57) **Abstract**

A battery module is provided. This battery module includes a plurality of battery cells; a holder that accommodates the plurality of battery cells; a tab member disposed in the holder and welded to an electrode terminal of a first battery cell of the plurality of battery cells; and insulating tape that insulates the tab member; wherein the tab member comprises a body part disposed on the holder, a neck part bent downward from the body part and disposed at least partially inside the holder, and a tab part bent from the neck part and connected to the electrode terminal, and the insulating tape comprises a body attachment part attached to the body part, and a tab attachment part separated from the body attachment part by a cutting line and attached to the tab part.

## Description

### FIELD

The present disclosure relates to a battery module. More particularly, the present disclosure relates to a battery module that insulates a tab member connecting battery cells with an insulating tape.

### BACKGROUND

A rechargeable battery is a battery that is capable of being repeatedly charged and discharged, unlike a primary battery. Small rechargeable batteries may be used for small portable electronic devices such as mobile phones, laptop computers, or camcorders. Large-capacity and high-density rechargeable batteries may be used to store motor driving power or energy for hybrid vehicles and/or electric vehicles.

### SUMMARY OF THE DISCLOSURE

An embodiment provides a battery module that attaches an insulating tape to the tab member to be insulated even when there is a step between a holder of the battery module and a battery cell of the battery module, and the tab member is bent.

A battery module according to an embodiment includes a plurality of battery cells; a holder that accommodates the plurality of battery cells; a tab member installed in the holder and welded to the electrode terminal of a first battery cell of the plurality of battery cells; and an insulating tape that insulates the tab member; wherein the tab member comprises a body part disposed on the holder, a neck part bent downward from the body part and disposed at least partially inside the holder, and a tab part bent from the neck part and connected to the electrode terminal, and the insulating tape comprises a body attachment part attached to the body part of the tab member.

The insulating tape may further include a tab attachment part separated from the body attachment part by a cutting line and attached to the tab part of the tab member.

The insulating tape may further include a connection part that connects the body attachment part and the tab attachment part, which are separated from each other preferably during the attachment process.

The plurality of battery cells may be cylindrical batteries, and the holder may form a circular opening that accommodates the first battery cell and corresponds to both ends of the first battery cell in an axial direction.

The body attachment part and the tab attachment part may include a straight boundary line formed along the boundary of the body part and the neck part, and a curved boundary line formed along the circular opening of the holder and connected to the straight boundary line.

The connection part may be formed at the curved boundary line and connect the body attachment part and the tab attachment part to each other, the body attachment part and the tab attachment part being separated from each other, preferably during an attachment process, and a remainder of the curved boundary line, other than the portion of the curved boundary line forming the connection part, and the straight boundary line may form the cutting line.

The connection part may comprise first and second connection parts respectively provided at opposite ends of the circular opening in a radial direction at a position parallel to the straight boundary line.

The connection part may comprise first and second connection parts formed on respective boundaries of the straight boundary line and the curved boundary line, the first and second connection parts connecting the body attachment part and the tab attachment part to each other, and separating the body attachment part and the tab attachment part from each other when being attached, and a remainder of the curved boundary line and the straight boundary line other than the first and second connection parts may complete the cutting line.

The first connection part may be provided at the center of the straight boundary line and the second connection part may be provided at a center of the curved boundary line, the centers of the straight boundary line and the curved boundary line corresponding to both ends of the circular opening in the radial direction.

A battery module according to an embodiment includes a plurality of battery cells; a holder that accommodates the plurality of battery cells; a tab member installed in the holder and welded to the electrode terminal of a first battery cell of the plurality of battery cells; and an insulating tape that insulates the tab member; wherein the tab member comprises a body part disposed on the holder, a neck part bent downward from the body part and disposed at least partially inside the holder, and a tab part bent from the neck part and connected to the electrode terminal, the insulating tape comprises a body attachment part attached to the body part of the tab member.

The insulating tape may further include a neck attachment part connected to the body attachment part and attached to the neck part of the tab member, and a tab attachment part separated from the body attachment part by a cutting line and connected to the neck attachment part, the tab attachment part configured to be attached to the tab part of the tab member.

The body attachment part and the neck attachment part of the insulating tape may set a straight boundary line along a boundary between the body part and the neck part of the tab member, the neck attachment part and the tab attachment part may be connected to the straight boundary line by setting a curved boundary line along the circular opening of the holder, the neck attachment part may comprise a portion of the insulating tape adjacent to the body attachment part and attached to the neck part, and the tab attachment part may comprise a remainder of the insulating tape other than the neck attachment part and the body attachment part.

The neck attachment part may be connected to the body attachment part by the straight boundary line, and the curved boundary line may form the cutting line.

The width of the neck attachment part may be formed to be less than 1/2 of the diameter of the circular opening of the holder.

The neck attachment part may be formed on a straight boundary line and connect the body attachment part and the tab attachment part to each other, include a pair of connection necks provided at both ends of the straight boundary line, and at least one partial cutting line formed in the straight boundary line direction to partially connect and partially separate the pair of connection necks, and the curved boundary line may form the cutting line.

The partial cutting line may be formed as a single line or multiple lines disposed along the direction of the straight boundary line.

A method of manufacturing a battery module according to an embodiment includes providing a holder to accommodate a plurality of battery cells; installing a tab member in the holder, the tab member comprising: a body part configured to be disposed on the holder; a neck part bent downward from the body part and configured to be disposed at least partially inside the holder; and a tab part bent from the neck part and configured to be connected to an electrode terminal of a first battery cell of the plurality of battery cells; welding the tab member to the electrode terminal of the first battery cell of the plurality of battery cells; and installing insulating tape in the battery module, the insulating tape insulating the tab member, wherein the insulating tape comprises: a body attachment part configured to be attached to the body part of the tab member; and a tab attachment part separated from the body attachment part by a cutting line and configured to be attached to the tab part of the tab member.

The holder may comprise a plurality of circular openings, and the method may further comprise installing respective ones of the plurality of battery cells into respective ones of the plurality of circular openings of the holder.

The method may further comprise manufacturing the tab part of the battery module at least in part by: bending the neck part downward from the body part; and bending the tab part relative to the neck part.

Installing the tab member may comprise disposing the body part on the holder and disposing the neck part at least partially inside the holder; and welding the tab member to the electrode terminal comprises connecting the tab part to the electrode terminal.

Installing the insulation tape may comprise attaching the body attachment part to the body part of the tab member and attaching the tab attachment part to the tab part of the tab member.

The insulating tape further may further comprise a connection part and installing the insulating tape comprises connecting the body attachment part and the tab attachment part via the connection part.

In the battery module according to an embodiment, even if the tab member is bent due to the step between the holder and the battery cell, the insulating tape may be attached to the body part and the tab part (for example, the first tab and the second tab) connecting from the tab member to the neck part (for example, the first neck, the second neck) to insulate the body part and the tab part of the tab member.

Therefore, it is possible to prevent the corrosion of the tab part welded to the electrode terminal-that is, galvanic corrosion. In this way, the insulating tape may be saved by eliminating the space between the insulating tape and the tab part.

In addition, since the insulating tape is provided with the body attachment part and the tab attachment part, in the process of attaching the body attachment part to the body part, the tab attachment part may be separated from the body attachment part and attached to the tab part, thereby improving the workability of attaching the insulating tape.

### BRIEF DESCRIPTION OF THE DRAWINGS

FIG. 1 is an exploded perspective view of a rechargeable battery module according to a first embodiment of the present disclosure.
FIG. 2 is a perspective view of an assembled upper part of the rechargeable battery module in FIG. 1.
FIG. 3 is a perspective view of the rechargeable battery module of FIG. 2 being rotated on its side.
FIG. 4 is a perspective view of a tab member of the rechargeable battery module of FIG. 1.
FIG. 5 is a perspective view showing a state in which an insulating tape is attached to a welded part of an electrode terminal and a tab member of the rechargeable battery module of FIG. 1.
FIG. 6 is a cross-sectional view of a portion of the rechargeable battery module cut along a line VI-VI in FIG. 5.
FIG. 7 is a plan view of the rechargeable battery module of FIG. 1 before attaching an insulating tape to a welded part of an electrode terminal and a tab member.
FIG. 8 is a plan view of a rechargeable battery module according to a second embodiment of the present disclosure before attaching an insulating tape to a welded part of an electrode terminal and a tab member.
FIG. 9 is a perspective view of a rechargeable battery module according to a third embodiment of the present disclosure with an insulating tape attached to a welded part of an electrode terminal and a tab member.
FIG. 10 is a plan view of a rechargeable battery module of FIG. 9 before attaching an insulating tape to a welded part of an electrode terminal and a tab.
FIG. 11 is a plan view of a rechargeable battery module according to a fourth embodiment of the present disclosure before attaching an insulating tape to a welded part of an electrode terminal and a tab member.

### DETAILED DESCRIPTION

Hereinafter, the present disclosure will be described more fully with reference to the accompanying drawings, in which embodiments of the disclosure are shown. As those skilled in the art would realize, the described embodiments may be modified in various different ways, all without departing from the scope of the present disclosure. The drawings and description are to be regarded as illustrative in nature and are not restrictive. Like reference numerals designate like elements throughout the specification.

As described herein, a rechargeable battery is a battery that is capable of being repeatedly charged and discharged. The rechargeable battery may be used as in rechargeable battery module including a plurality of battery cells coupled in series and/or in parallel to drive a motor of a hybrid vehicle-for example, where relatively high energy density is required. For example, the rechargeable battery module may be formed by connecting electrode terminals of a plurality of battery cells. The number of battery cells may depend on the desired amount of electric power to implement a relatively high-power rechargeable battery module (e.g., an electric vehicle).

For example, the rechargeable battery module is formed by housing a plurality of battery cells in a holder and connecting the plurality of battery cells in series and/or in parallel with tabs. Since the rechargeable battery module may have high voltage and current depending on the consumer's usage conditions, it may include tabs that connect the battery cells, and a battery management system connected to the tabs.

An insulating tape may be used to insulate the tabs. Since the insulating tape is integrally formed, there is a step between the holder and the battery cell, so that when the tab is bent, the insulating tape is attached to the upper side of the holder and the tab, and the insulating tape cannot directly insulate the welded part of the electrode terminal and the tab. In other words, the welded part of the electrode terminal and the tab form a space separated from the insulating tape, and the part of the rechargeable battery module exposed by this empty space is vulnerable to galvanic corrosion.

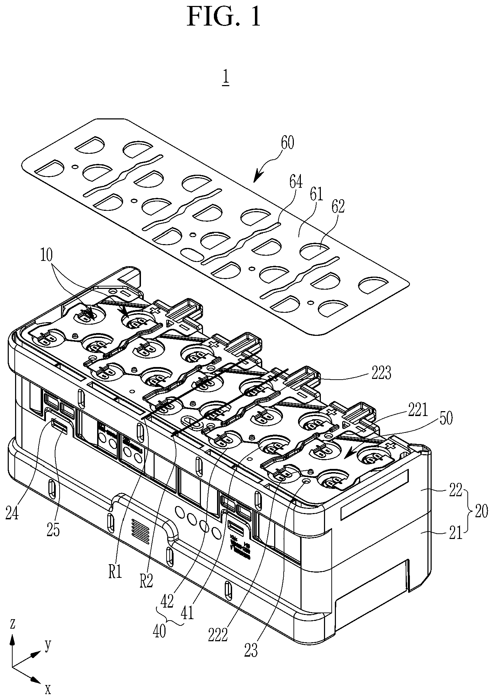

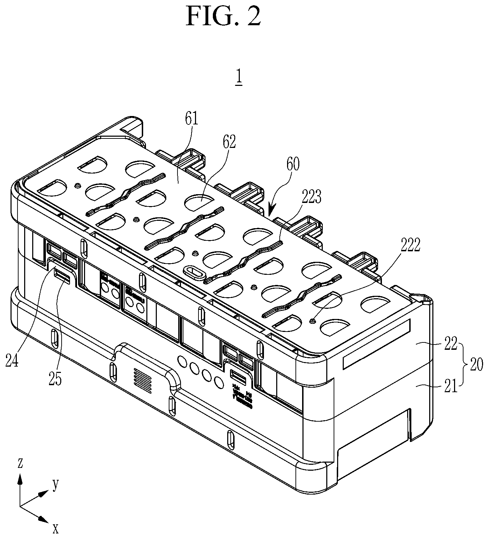

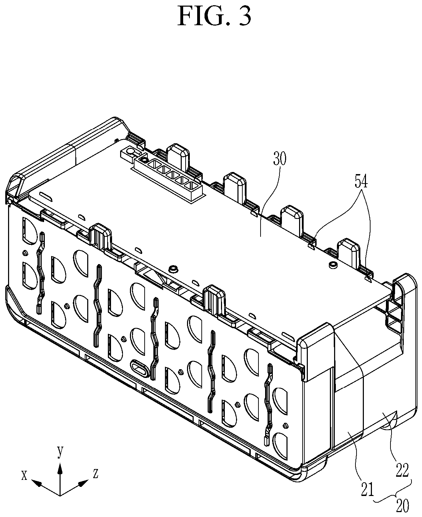

FIG. 1 is an exploded perspective view of a rechargeable battery module according to a first embodiment of the present disclosure. FIG. 2 is a perspective view of an assembled upper part of the rechargeable battery module of FIG. 1. FIG. 3 is a perspective view of the rechargeable battery module of FIG. 2 being rotated on its side.

Referring to FIG. 1 to FIG. 3, a rechargeable battery module 1 of the first embodiment includes a plurality of battery cells 10, a holder 20 that accommodates the plurality of battery cells 10, a tab member 50 welded to electrode terminals 40 of the plurality of battery cells 10, and an insulating tape 60 that electrically insulates the tab member 50.

Each of the plurality of battery cells 10 may be a cylindrical rechargeable battery including an electrode terminal 40 at both ends of the axial direction of the cylindrical rechargeable battery. That is, the electrode terminal 40 includes a positive terminal 41 and a negative terminal 42 provided at both ends of the axial direction of each battery cell 10.

The holder 20 includes a bottom holder 21 and a top holder 22. The bottom holder 21 and the top holder 22 form a honeycomb structure inside to accommodate the plurality of battery cells 10 spaced in a first direction (an x-axis direction) and in a second direction (a y-axis direction) intersecting the first direction. The bottom holder 21 and top holder 22 are coupled together in a third direction (a z-axis direction) that intersects the second direction, and are firmly fastened with a fastening member 23.

In FIG. 1, the bottom holder 21 accommodates the lower side of battery cells 10, and the top holder 22 accommodates the upper side of the battery cells 10. In this state, the bottom holder 21 and the top holder 22 are fastened with the fastening member 23.

In addition, the bottom holder 21 and the top holder 22 may be further coupled with a snap fit structure comprising a coupling part 24 provided on the outside of the bottom holder 21 and a protrusion part 25 provided on the outside of the top holder 22 corresponding to the coupling part 24.

The plurality of battery cells 10 are accommodated in the holder 20 and arranged in a first row R1 and a second row R2 parallel to the first row R1. The first row R1 and the second row R2 are set in the second direction and spaced apart from each other in the first direction. The rechargeable battery module may comprise multiple sets of the first and second rows R1, R2.

As an example, in the first row R1, a negative terminal 42 is placed upward and a positive terminal 41 is placed downward. Also, in the second row R2, the positive terminal 41 is placed upward and the negative terminal 42 is placed downward.

The axial center of the battery cells 10 placed in the first row R1 and the axial center of the battery cells 10 placed in the second row R2 are arranged offset from each other in the direction that intersects the first row R1 and the second row R2. Therefore, the spacing between the adjacent cylindrical battery cells 10 may be formed to be equal to each other.

That is, for the battery cells 10 placed in the first row R1, the battery cells 10 placed in the second row R2 are shifted in the second direction (the y-axis direction). Therefore, the sides of two battery cells 10 placed at the ends of the first row R1 and the second row R2 are arranged in a direction that is misaligned from the arrangement direction of the first row R1 and the second row R2.

The tab members 50 are arranged in a seating groove 221 of the bottom holder 21 and the top holder 22 to connect the corresponding electrode terminals 40 to each other. A protruding portion 222 is provided on one side of the seating groove 221 and is coupled to a coupling hole H corresponding to the tab member 50.

Therefore, the seating groove 221 may set the position of the tab member 50 before the tab member 50 is welded to the electrode terminals 40 to keep the position of the tab member 50 constant. In addition, the protruding portion 222 is coupled to the coupling hole H when setting the position of the tab member 50 is completed to prevent the tab member 50 from being separated from the seating groove 221.

As an example, the tab members 50 may be formed of a nickel material and may be electrically connected to a battery management system (BMS, 30) by electrically connecting the battery cells 10 in parallel and/or series. The tab members 50 may be formed by punching and bending thin sheets.

As an example, the battery management system (BMS) 30 may be installed on the sides of the bottom holder 21 and the top holder 22. The tab members 50 each have an output terminal 54 on one side of the first direction (the x-axis direction) and are electrically connected to the battery management system (BMS) 30 through the output terminal 54. For the installation of the tab members 50, the bottom holder 21 and the top holder 22 may be opened on the sides, as appropriate.

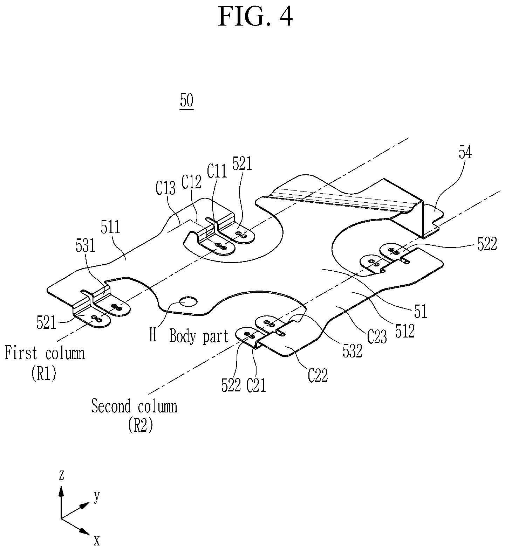

FIG. 4 is a perspective view of a tab member of FIG. 1. Again, referring to FIG. 4, the tab member 50 includes a body part 51, a first tab 521 and a second tab 522 that designated as tab portions of the tab member 50, and a first neck 531 and a second neck 532 that are designated as neck portions of the tab member 50.

The top holder 22 accommodates the battery cells 10 and has circular openings 224 that are open and correspond to both ends of the axial direction of the battery cell 10 (see FIG. 1 and FIG. 2). The openings 224 are formed in a corresponding structure in the bottom holder 21. For simplicity, the description of the bottom holder 21 is omitted.

The connection structure of the first tab 521 includes a connection C11, which is bent into two branches to be welded to the negative terminal 42 and extends in the height direction (the z-axis direction), a connection C12, which extends in the direction orthogonal to the first row R1, and a connection C13 extending in the direction of the first row R1 through a first auxiliary part 511 of the tab member 50 to be connected to a body part 51 of the tab member.

The connection structure of the second tab 522 includes a connection C21, which is bent in two branches to be welded to the positive terminal 41 and extends in the height direction (the z-axis direction), a connection C22, which extends in the direction orthogonal to the second row R2, and a connection C23, which extends in the second row R2 direction to be connected to the body part 51 through a second auxiliary part 512 of the tab member 50.

In the connection structure of the first tab 521, including the connection C11, the connection C12, and the connection C13, and the connection structure of the second tab 522, including the connection C21, the connection C22, and the connection C23, the negative and positive terminals 42 and 41 are connected to the body part 51 over a long distance.

Therefore, the difference between the entire distance of the connection structure of the first tab 521 to the final output terminal of the tab member 50 through the body part 51 and the entire distance of the connection structure of the second tab 522 to the final output terminal of the tab member 50 through the body part 51 may be minimized. In other words, the voltage difference between the battery cell 10 in the first row R1 and the battery cell 10 in the second row R2 may be minimized.

Again referring to FIG. 1, FIG. 2, and FIG. 4, the body part 51 is placed between the first row R1 and the second row R2 of the battery cells 10 and connected in the second direction (the y-axis direction). For this, the body part 51 extending in the second direction (the y-axis direction) further includes the first auxiliary part 511 and the second auxiliary part 512 connected in the first direction (the x-axis direction).

The first tab 521 is connected to the negative terminals 42 of the first row R1. That is, the first tab 521 is connected to the body part 51 through the first auxiliary part 511, and is placed in the first row R1. The second tab 522 is connected to the positive terminals 41 in the second row R2. That is, the second tab 522 is connected to the body part 51 through the second auxiliary part 512 and is placed in the second row R2.

The first auxiliary part 511 has a pair of electrically connected first tabs 521 and couples the negative terminals 42 of two battery cells 10 arranged in the second direction (the y-axis direction) in parallel. The first auxiliary part 511 avoids (e.g., is disposed around) two battery cells 10 arranged in the first row R1 direction and is connected to the body part 51 through the portion between two battery cells 10.

The first neck 531 is bent downward from the first auxiliary part 511 of the body part 51 and placed on the side inside the opening 224 through the opening 224 of the top holder 22. A pair of first tabs 521 is connected to the first neck 531 and the first neck 531 avoids the two battery cells 10 arranged in the first row R1 direction. The pair of first tabs 521 is connected to the negative terminal 42 of each of two battery cells 10.

The second auxiliary part 512 is provided with a pair of electrically connected second tabs 522, and couples the positive terminals 41 of two battery cells 10 arranged in the second direction (the y-axis direction) in parallel. The second auxiliary part 512 avoids two battery cells 10 arranged in the second row R2 direction and is connected to the body part 51 through the portion between two battery cells 10.

The second neck 532 is bent downward from the second auxiliary part 512 of the body part 51 and placed inside the opening 224 through the opening 224 of the top holder 22. A pair of second tabs 522 is connected to the second neck 532 and the second neck 532 avoids two battery cells 10 arranged in the second row R2 direction. The pair of second tabs 522 is connected to the positive terminal 41 of each of the two battery cells 10.

The first tab 521, the first neck 531, and the first auxiliary part 511 in the first row R1 may make the current paths of two battery cells 10 positioned in the first row R1 to be the same up to the body part 51. Therefore, the voltage difference between the battery cells 40 in the first row R1 may be minimized (e.g., equal to zero).

The second tab 522, the second neck 532, and the second auxiliary part 512 in the second row R2 may make the current paths of two battery cells 10 positioned in the second row R2 to be the same up to body part 51. Therefore, the voltage difference between the battery cells 40 in the second row R2 may be minimized (e.g., equal to zero).

In addition, the body part 51 is connected to the first auxiliary part 511 and the second auxiliary part 512 to couple in series two battery cells 10 connected in parallel in the first row R1 and two battery cells 10 connected in parallel in the second row R2.

Therefore, the current of two battery cells 10 connected in parallel in the first row R1 flows to the body part 51, and the current of two battery cells 10 connected in parallel in the second row R2 flows to the body part 51.

At this time, since the body part 51 of tab member 50 is shared with the first row R1 and the second row R2, the voltage difference between the battery cells 40 of the first row R1 and the second row R2 may be minimized. As a result, a shortening of the life-cycle of the battery cells 40 may be prevented or minimized.

Again referring to FIG. 1 and FIG. 2, the insulating tape 60 includes a body attachment part 61 attached to the body part 51, and a tab attachment part 62 attached to the first and second tabs 521 and 522 of the tab part. The body attachment part 61 and the tab attachment part 62 are separated by a cutting line CL and attached to the body part 51 and the first and second tabs 521 and 522 of the tab part, respectively.

The insulating tape 60 includes a connection part 63 that connects the body attachment part 61 and the tab attachment part 62, and separates the body attachment part 61 and the tab attachment part 62 from each other during the attaching process. Since the connection part 63 is separated in the attaching process, the body attachment part 61 and the tab attachment part 62 may be attached to the body part 51, and the first and second tabs 521 and 522, respectively.

Meanwhile, the top holder 22 has a rib 223 that protrudes between the neighboring tab members 50 in the first direction and extends in the second direction. Additionally, the insulating tape 60 has a cut part 64 corresponding to the rib 223. Before attachment, when the insulating tape 60 is placed on the tab members 50, the cut part 64 is coupled to the rib 223, thereby preventing the insulating tape 60 from flowing.

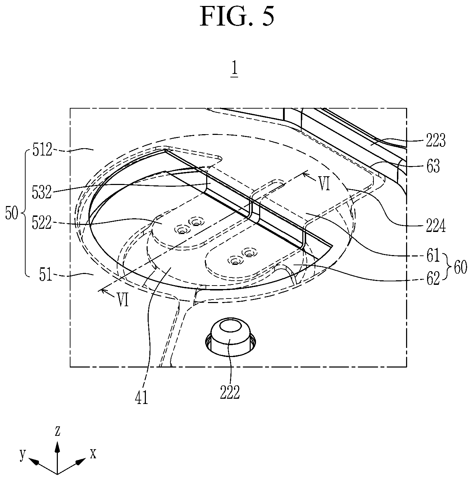

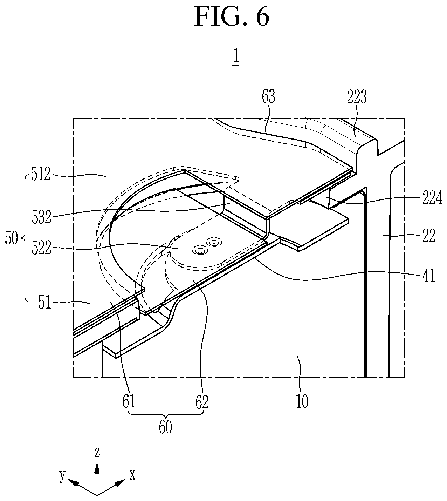

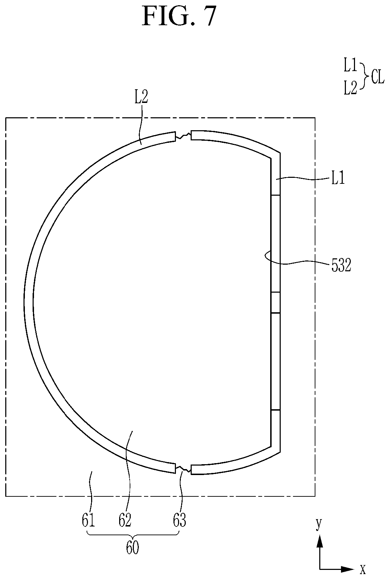

FIG. 5 is a perspective view showing a state in which an insulating tape is attached to a welded part of an electrode terminal and a tab member of the rechargeable battery module of FIG. 1. FIG. 6 is a cross-sectional view cut along a line VI-VI in FIG. 5. FIG. 7 is a plan view showing a state before an insulating tape is attached to a welded part of an electrode terminal and a tab member of the rechargeable battery module of FIG. 1. For convenience of explanation, the insulating tape 60 attached to the positive terminal 41 shown in FIG. 5 to FIG. 7 will be described.

Referring to FIG. 5 to FIG. 7, a body attachment part 61 and a tab attachment part 62 includes a straight boundary line L1 and a curved boundary line L2. The straight boundary line L1 is formed along the boundary between the body part 51 and the neck part. In the neck part, a pair of second necks 532 are arranged as a straight line, and the straight boundary line L1 is set to correspond to this pair of second necks 532. The curved boundary line L2 is formed along the circular opening 224 of the top holder 22 and is connected to the straight boundary line L1.

The connection part 63 is formed at the curved boundary line L2 and connects the body attachment part 61 and the tab attachment part 62 to each other. The body attachment part 61 and the tab attachment part 62 are separated from each other when the insulating tape 60 is attached to the tab member 50. The remaining portion of the curved boundary line L2 that is not provided with the connection part 63 and the straight boundary line L1 are connected to each other to complete the cutting line CL.

The connection part 63 may be provided at both ends in the radial direction of the holder opening 224 at a position parallel to the straight boundary line L1. When attaching the body attachment part 61 to the body part 51, the tab attachment part 62 may be separated from the body attachment part 61 in a balanced state. In other words, by minimizing the disparity between the connection parts 63 on both sides, the tab attachment part 62 may be accurately attached to the welded part of the second tab 522 and the positive terminal 41.

The top holder 22 and the positive terminal 41 have a step between them, and the second neck 532 has a length corresponding to the step. That is, the second neck 532 of the tab member 50 is bent at the second auxiliary part 512 of the body part 51, and the second tab 522 is bent at the second neck 532.

In this case as well, the insulating tape 60 is attached to the body part 51 of the tab member 50 by the separated body attachment part 61, and the tab attachment part 62 is separated from the body attachment part 61 through the connection part 63 and attached to the second tab 522.

Therefore, the welded part of the second tab 522 and the positive terminal 41 is insulated by the tab attachment part 62. It is possible to prevent the welded part of the positive terminal 41 and the second tab 522 from being corroded (e.g., from galvanic corrosion).

In this way, the space is eliminated between the tab attachment part 62 of the insulating tape 60 and the second tab 522. In other words, it is possible to reduce the insulating tape 60 by forming the electrical insulation to the welded part with the minimum area of insulating tape 60.

In addition, since the insulating tape 60 is provided by connecting the body attachment part 61 and the tab attachment part 62 with the connection part 63, in the process of attaching the body attachment part 61 to the body part 51, the tab attachment part 62 is separated from the body attachment part 61 and attached to the second tab 522, so workability may be improved.

Various embodiments of the present disclosure are described below. The descriptions of the configurations that are the same as those of the first embodiment and the previously described embodiments will be omitted, and descriptions of different configurations will be described.

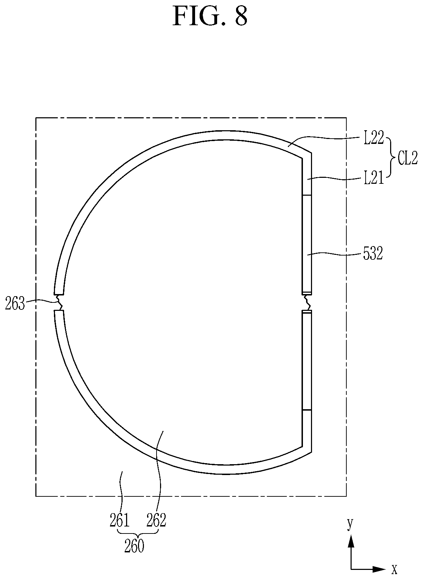

FIG. 8 is a plan view showing a state before an insulating tape is attached to a welded part of an electrode terminal and a tab member in a rechargeable battery module according to a second embodiment of the present disclosure. Referring to FIG. 8, in an insulating tape 260 applied to a rechargeable battery module of the second embodiment, connection parts 263 are formed one by one at a straight boundary line L21 and a curved boundary line L22 to connect the body attachment part 261 and the tab attachment part 262 to each other, and then separated from each other when the insulating tape 260 is attached to the tab member 50. The remaining portion of the curved boundary line L22 and the remaining portion of the straight boundary line L21, which are not provided with the connection part 263, are connected to each other to complete a cutting line CL2.

The connection part 263 may be provided at the center of the straight boundary line L21 and the center of the curved boundary line L22, respectively. That is, the connection parts 263 may be provided at each of the ends of the holder opening 224 in the radial direction. When attaching the body attachment part 261 to the body part 51, the tab attachment part 262 may be separated from the body attachment part 261 in a balanced state. In other words, by minimizing the disparity between the connection parts 263 on both sides, the tab attachment part 262 may be accurately attached to the welded part of the second tab 522 and the positive terminal 41.

Therefore, the welded part of the second tab 522 and the positive terminal 41 are electrically insulated by the tab attachment part 262. The welded part of the positive terminal 41 and the second tab 522 may be prevented from being corroded (e.g., by galvanic corrosion).

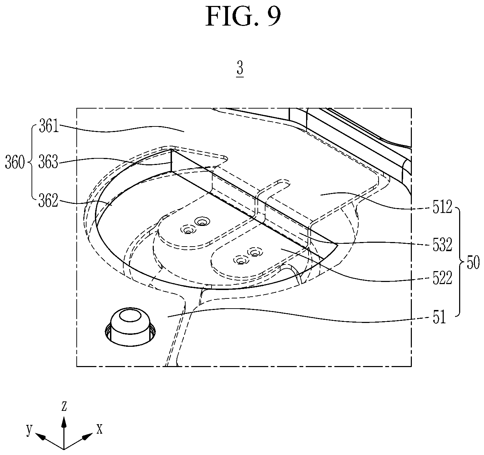

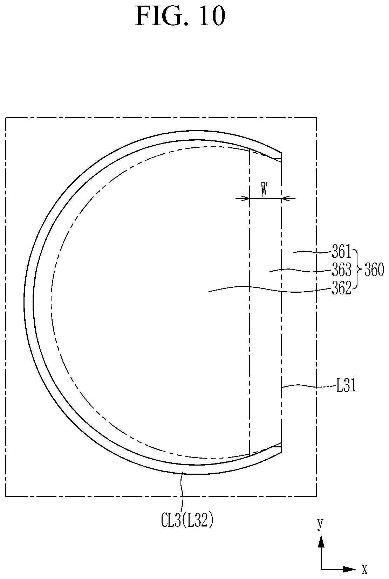

FIG. 9 is a perspective view showing a state in which an insulating tape is attached to a welded part of an electrode terminal and a tab member in a rechargeable battery module according to a third embodiment of the present disclosure. FIG. 10 is a plan view showing a state before an insulating tape is attached to a welded part of an electrode terminal and a tab member of the rechargeable battery module of FIG. 9.

Referring to FIG. 9 and FIG. 10, in the third embodiment of the rechargeable battery module 3, an insulating tape 360 includes a body attachment part 361 and a neck attachment part 363, and a tab attachment part 362 that are attached to each other. The body attachment part 361 and the tab attachment part 362 are separated by a cutting line CL3.

The body attachment part 361 is attached to a body part 51, the neck attachment part 363 is attached to a neck part (for example, a second neck 532), and the tab attachment part 362 is attached to a tab part (for example, a second tab 522).

The body attachment part 361 and the neck attachment part 363 establish a straight boundary line L31 along the boundary between the body part 51 and the second neck 532. In other words, the neck attachment part 363 is connected to the body attachment part 361 by the straight boundary line L31.

The neck attachment part 363 and the tab attachment part 362 are connected to the straight boundary line L31 by setting a curved boundary line L32 along the circular opening 224 of the top holder 22. That is, the curved boundary line L32 forms a cutting line CL3.

Among the neck attachment part 363 and the tab attachment part 362, a part adjacent to the body attachment part 361 and attached to a neck part (see second neck 532 in FIG. 5) sets the neck attachment part 363, and the remaining part excluding the neck attachment part 363 sets the tab attachment part 362.

In the attaching process, since the neck attachment part 363 is connected, if the body attachment part 361 is attached to the body part 51 and the neck attachment part 363 is attached to the second neck 532, the tab attachment part 362 may be attached to the second tab 522.

In this case, the tab attachment part 362 is pulled toward the neck attachment part 363 by the width W of the neck attachment part 363, but still provides sufficient insulation for the second tab 522. For this, the width W of the neck attachment part 363 is formed to be less than 1/2 of the diameter D of the opening 224 of the top holder 22 (W ≤ D/2). The insulating tape 360 of the third embodiment may further insulate the second neck 532 by further including the neck attachment part 363.

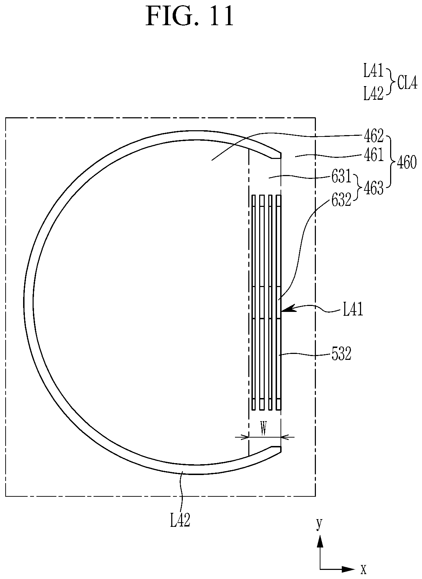

FIG. 11 is a plan view showing a state before an insulating tape is attached to a welded part of an electrode terminal and a tab member in a rechargeable battery module according to a fourth embodiment of the present disclosure. Referring to FIG. 11, an insulating tape 460 applied to a rechargeable battery module according to a fourth embodiment includes a body attachment part 461, a neck attachment part 463, and a tab attachment part 462 connected to each other. The body attachment part 461 and the tab attachment part 462 are separated by a cutting line CL4.

The body attachment part 461 is attached to the body part 51, the neck attachment part 463 is attached to a neck part (for example, second neck 532 in FIG. 9), and the tab attachment part 462 is attached to a tab part (for example, second tab 522 in FIG. 9).

The body attachment part 461 and the neck attachment part 463 establish a straight boundary line L41 along the boundary between the body part 51 and the second neck 532. Additionally, the neck attachment part 463 is formed at the straight boundary line L41 and connects the body attachment part 461 and the tab attachment part 462 to each other. The neck attachment part 463 includes a pair of connection necks 631 provided at both ends of the straight boundary line L41, and a cutting line 632 to partially connect and partially separate the pair of connection necks 631. The cutting line 632 may be formed in the direction of the straight boundary line L41 and formed of one part or a plurality of parts. The curved boundary line L42 forms a cutting line.

The cutting line 632 may be formed as one part or as separated in multiple parts along the direction of the straight boundary line L41. In the present embodiment, the partial cutting line 632 is formed as one part along the direction of the straight boundary line L41, and is provided in multiple parts in the direction of the width W, and when the neck attachment part 463 is attached to the second neck 532, the gap between the cutting lines 632 widens to sufficiently cover the welded part of the positive terminal 41 and the second tab 522 to become electrically insulated.

According to some embodiments, there is provided a method of manufacturing a rechargeable battery module. According to an embodiment, the method of manufacturing a rechargeable battery module comprises providing a holder to accommodate a plurality of battery cells; installing a tab member in the holder, the tab member comprising: a body part configured to be disposed on the holder; a neck part bent downward from the body part and configured to be disposed at least partially inside the holder; and a tab part bent from the neck part and configured to be connected to an electrode terminal of a first battery cell of the plurality of battery cells; welding the tab member to the electrode terminal of the first battery cell of the plurality of battery cells; and installing insulating tape in the rechargeable battery module, the insulating tape insulating the tab member, wherein the insulating tape comprises: a body attachment part configured to be attached to the body part of the tab member; and a tab attachment part separated from the body attachment part by a cutting line and configured to be attached to the tab part of the tab member.

The holder may comprise a plurality of circular openings, and the method may further comprise installing respective ones of the plurality of battery cells into respective ones of the plurality of circular openings of the holder.

The method may further comprise manufacturing the tab part of the rechargeable battery module at least in part by: bending the neck part downward from the body part; and bending the tab part relative to the neck part.

Installing the tab member may comprise disposing the body part on the holder and disposing the neck part at least partially inside the holder; and welding the tab member to the electrode terminal comprises connecting the tab part to the electrode terminal.

Installing the insulation tape may comprise attaching the body attachment part to the body part of the tab member and attaching the tab attachment part to the tab part of the tab member.

The insulating tape further may further comprise a connection part and installing the insulating tape comprises connecting the body attachment part and the tab attachment part via the connection part.

While this disclosure has been described in connection with what is presently considered to be practical exemplary embodiments, it is to be understood that the disclosure is not limited to the disclosed embodiments, but, on the contrary, is intended to cover various modifications and equivalent arrangements included within the scope of the appended claims.

### <Description of symbols>

| | | | |
|---|---|---|---|
| 1, 3: | rechargeable battery module | 10: | battery cell |
| 20: | holder | 21: | bottom holder |
| 22: | top holder | 23: | fastening member |
| 24: | coupling part | 25: | protrusion part |
| 30: | battery management system (BMS) | 40: | electrode terminal |
| 41: | positive terminal | 42: | negative terminal |
| 50: | tab member | 51: | body part |
| 54: | output terminal | 60: | insulating tape |
| 61: | body attachment part | 62: | tab attachment part |
| 63: | connection part | 64: | cut part |
| 221: | seating groove | 222: | protruding portion |
| 223: | rib | 260: | insulating tape |
| 261: | body attachment part | 262: | tab attachment part |
| 263: | connection part | 360: | insulating tape |
| 361: | body attachment part | 363: | neck attachment part |
| 362: | tab attachment part | 460: | insulating tape |
| 461: | body attachment part | 463: | neck attachment part |
| 462: | tab attachment part | 511: | first auxiliary part |
| 512: | second auxiliary part | 521: | first tab |
| 522: | second tab | 531: | first neck |
| 532: | second neck | 631: | connection necks |
| 632: | cutting line | 224: | opening |
| C11: | connection | C12: | connection |
| C13: | connection | C21: | connection |
| C22: | connection | C23: | connection |
| CL: | cutting line | CL2: | cutting line |
| CL3: | cutting line | CL4: | cutting line |
| H: | coupling hole | L1: | straight boundary line |
| L2: | curved boundary line | L21: | straight boundary line |
| L22: | curved boundary line | L31: | straight boundary line |
| L32: | curved boundary line | L41: | straight boundary line |
| L42: | curved boundary line | R1: | first row |
| R2: | second row | W: | width |

## Claims

1. A battery module (1, 3) comprising:
a plurality of battery cells (10);
a holder (20) that accommodates the plurality of battery cells (10);
a tab member (50) installed in the holder (20) and welded to an electrode terminal of a first battery cell (10) of the plurality of battery cells (10); and
insulating tape (60, 260, 360, 460) that insulates the tab member (50);
wherein the tab member (50) comprises:
a body part (51) disposed on the holder (20), and
a neck part bent downward from the body part (51) and disposed at least partially inside the holder (20), and
a tab part bent from the neck part and connected to the electrode terminal; and
the insulating tape (60, 260, 360, 460) comprises:
a body attachment part (61, 261, 361, 461) attached to the body part (51) of the tab member (50).

2. The battery module (1, 3) according to claim 1, wherein the insulating tape (60, 260, 360, 460) further comprises:
a tab attachment part (62, 262, 362, 462) separated from the body attachment part (61, 261, 361, 461) by a cutting line (632) and attached to the tab part of the tab member (50).

3. The battery module (1, 3) according to claim 2, wherein:
the insulating tape (60, 260, 360, 460) further comprises a connection part (63, 263) that connects the body attachment part (61, 261, 361, 461) and the tab attachment part (62, 262, 362, 462), the body attachment part (61, 261, 361, 461) and the tab attachment part (62, 262, 362, 462) being separated from each other, preferably during an attaching process.

4. The battery module (1, 3) according to claim 3, wherein:
the plurality of battery cells (10) comprises a plurality of cylindrical batteries, and
the holder (20) accommodates the first battery cell (10) and forms a circular opening (224) corresponding to both ends of the first battery cell (10) in an axial direction.

5. The battery module (1, 3) according to claim 4, wherein:
the body attachment part (61, 261, 361, 461) and the tab attachment part (62, 262, 362, 462) include:
a straight boundary line formed along a boundary of the body part (51) and the neck part, and
a curved boundary line formed along the circular opening (224) of the holder (20) and connected to the straight boundary line.

6. The battery module (1, 3) according to claim 5, wherein:
the connection part (63, 263) is formed at the curved boundary line and connects the body attachment part (61, 261, 361, 461) and the tab attachment part (62, 262, 362, 462) to each other, and
a remainder of the curved boundary line, other than the portion of the curved boundary line forming the connection part (63, 263), and the straight boundary line form the cutting line (632).

7. The battery module (1, 3) according to claim 5, wherein:
the connection part (63, 263) comprises first and second connection parts (63, 263) formed on respective boundaries of the straight boundary line and the curved boundary line, the first and second connection parts (63, 263) connecting the body attachment part (61, 261, 361, 461) and the tab attachment part (62, 262, 362, 462) to each other and separates the body attachment part (61, 261, 361, 461) and the tab attachment part (62, 262, 362, 462) from each other when attached, and
a remainder of the curved boundary line and the straight boundary line other than the first and second connection parts (63, 263) complete the cutting line (632).

8. The battery module (1, 3) according to claim 1,
wherein the insulating tape (60, 260, 360, 460) further comprises:
a neck attachment part (363, 463) connected to the body attachment part (61, 261, 361, 461) and attached to the neck part of the tab member (50), and
a tab attachment part (62, 262, 362, 462) separated from the body attachment part (61, 261, 361, 461) by a cutting line (632) and connected to the neck attachment part (363, 463), the tab attachment part (62, 262, 362, 462) configured to be attached to the tab part of the tab member (50).

9. The battery module (1, 3) according to claim 8, wherein:
the body attachment part (61, 261, 361, 461) and the neck attachment part (363, 463) of the insulating tape (60, 260, 360, 460) set a straight boundary line along a boundary between the body part (51) and the neck part of the tab member (50),
the neck attachment part (363, 463) and the tab attachment part (62, 262, 362, 462) are connected to the straight boundary line by setting a curved boundary line along a circular opening (224) of the holder (20),
the neck attachment part (363, 463) comprises a portion of the insulating tape (60, 260, 360, 460) adjacent to the body attachment part (61, 261, 361, 461) and attached to the neck part; and
the tab attachment part (62, 262, 362, 462) comprises a remainder of the insulating tape (60, 260, 360, 460) other than the neck attachment part (363, 463) and the body attachment part (61, 261, 361, 461).

10. The battery module (1, 3) according to claim 9, wherein:
the neck attachment part (363, 463) is connected to the body attachment part (61, 261, 361, 461) by the straight boundary line, and
the curved boundary line forms the cutting line (632).

11. The battery module (1, 3) according to claim 8, wherein:
the neck attachment part (363, 463) is formed on a straight boundary line and connects the body attachment part (61, 261, 361, 461) and the tab attachment part (62, 262, 362, 462) to each other,
the neck attachment part (363, 463) comprises a pair of connection necks (631) provided at both ends of the straight boundary line, and at least one partial cutting line (632) formed in the straight boundary line direction to partially connect and partially separate the pair of connection necks (631), and
a curved boundary line forms the cutting line (632).

12. A method of manufacturing a battery module (1, 3), the method comprising:
providing a holder (20) to accommodate a plurality of battery cells (10);
installing a tab member (50) in the holder (20), the tab member (50) comprising:
a body part (51) configured to be disposed on the holder (20);
a neck part bent downward from the body part (51) and configured to be disposed at least partially inside the holder (20); and
a tab part bent from the neck part and configured to be connected to an electrode terminal of a first battery cell (10) of the plurality of battery cells (10);
welding the tab member (50) to the electrode terminal of the first battery cell (10) of the plurality of battery cells (10); and
installing insulating tape (60, 260, 360, 460) in the battery module (1, 3), the insulating tape (60, 260, 360, 460) insulating the tab member (50), wherein the insulating tape (60, 260, 360, 460) comprises:
a body attachment part (61, 261, 361, 461) configured to be attached to the body part (51) of the tab member (50); and
a tab attachment part (62, 262, 362, 462) separated from the body attachment part (61, 261, 361, 461) by a cutting line (632) and configured to be attached to the tab part of the tab member (50).

13. The method according to claim 12, wherein the holder (20) comprises a plurality of circular openings (224), and the method further comprises installing respective ones of the plurality of battery cells (10) into respective ones of the plurality of circular openings (224) of the holder (20).

14. The method according to claim 12 or 13, further comprising manufacturing the tab part of the battery module (1, 3) at least in part by:
bending the neck part downward from the body part (51); and
bending the tab part relative to the neck part.

15. The method according to any one of claims 12 to 14, wherein installing the tab member (50) comprises disposing the body part (51) on the holder (20) and disposing the neck part at least partially inside the holder (20); and welding the tab member (50) to the electrode terminal comprises connecting the tab part to the electrode terminal.
